# EUROPÄISCHE PATENTSCHRIFT

(11) **EP 2 113 395 B1**
(45) Veröffentlichungstag und Bekanntmachung des Hinweises auf die Patenterteilung: **27.03.2013**
(21) Anmeldenummer: 09005869.4
(22) Anmeldetag: 28.04.2009
(51) Int. Cl.: B60B 27/02

(54) **Nabe, insbesondere für Fahrräder**
Hub, in particular for bicycles
Moyeu, en particulier pour vélos

(30) Priorität: 30.04.2008 DE 102008021803
(43) Veröffentlichungstag der Anmeldung: 04.11.2009
(73) Patentinhaber: DT Swiss AG, 2500 Biel (CH)
(72) Erfinder: Spahr, Stefan, 2543 Lengau (CH)
(74) Vertreter: Schütte, Hartmut

(56) Entgegenhaltungen:
- EP-A1- 1 621 788
- EP-A1- 1 820 666
- EP-A2- 0 791 482
- EP-A2- 1 447 241
- DE-A1- 19 856 627
- US-A- 3 922 018

## Beschreibung

Die vorliegende Erfindung betrifft eine Nabe, insbesondere auch für Fahrräder. Die erfindungsgemäße Nabe eignet sich besonders zum Einsatz an einer Vorderradnabe, welche mit einer Steckachse ausgerüstet ist.

Im Stand der Technik sind Naben und insbesondere Naben für Vorderräder bekannt geworden, die Steckachsen aufweisen. Solche Naben weisen ein Nabengehäuse auf, in dem an jedem Ende ein Lager in einem Lagersitz aufgenommen ist. Um die Lagerinnenringe in einem definierten Abstand zu halten, wird zwischen den Lagerinnenringen eine Hülse angeordnet, die die Lagerinnenringe in einem definierten axialen Abstand zueinander hält. Eine solche Nabe gemäß dem Oberbegriff des Anspruchs 1 ist aus der EP 0 791 482 A bekannt.

Bei der Montage wird die Steckachse durch den Lagerinnenring auf der einen Seite der Nabe eingeführt. Die Steckachse muss anschließend durch die als Abstandshalter zwischen den Lagern dienende Hülse durchgeführt werden. Die Hülse ist möglichst dünnwandig ausgeführt, um unnötiges Gewicht einzusparen. Deshalb liegt die im unmontierten Zustand meist lose angeordnete Hülse auf dem jeweils radial unteren Boden der Innenwand des Nabengehäuses auf. Darum kann die Steckachse nicht ohne Weiteres in die Hülse eingesteckt werden, da in diesem Zustand die Hülse nicht zentrisch angeordnet ist und die obere Wandung der Hülse das Einführen der Steckachse verhindert.

Um das Einführen der Steckachse in die Hülse zu ermöglichen, muss der Benutzer deshalb von der anderen Seite mit einem Finger oder einem Werkzeug in die Nabe hineingreifen und die Hülse zentrisch zum Nabengehäuse ausrichten, sodass die Steckachse durch die zentrisch angeordnete Öffnung in die Hülse eingeführt werden kann.

Insbesondere, da oftmals gleichzeitig das gesamte Vorderrad passend zu den Ausfallenden der Vorderradgabel ausgerichtet werden muss, stellt eine solche Ausrichtung der Hülse eine lästige zusätzliche Aktion dar, die unnötig Zeit beansprucht und oftmals einige Versuche oder ein geeignetes Werkzeug erfordert.

Eine Lösung dieses Problems kann darin bestehen, auf eine Steckachse zu verzichten und eine sogenannte Hohlachse einzusetzen auf der die Lager angeordnet werden und durch die ein Schnellspanner oder dergleichen durchgeführt wird, um die Nabe und das Laufrad an der Gabel zu befestigen.

Solche Laufräder mit Hohlachsen funktionieren zuverlässig und sind seit langem im Einsatz. Insbesondere beim Mountainbiken treten aber oftmals hohe und höchste seitliche Belastungen und auch Torsionsbelastungen des Laufrades auf. Deshalb wird eine besonders hohe Steifigkeit des Laufrades gewünscht. Hier bieten Steckachsen generell den Vorteil einer höheren Seitensteifigkeit.

Vor dem beschriebenen Hintergrund des Standes der Technik ist es deshalb die Aufgabe der vorliegenden Erfindung, eine Nabe, insbesondere für ein Fahrrad zur Verfügung zu stellen, welche unter Verwendung einer Steckachse eine leichtere Montage erlaubt.

Diese Aufgabe wird gelöst durch eine Nabe mit den Merkmalen des Anspruchs 1. Bevorzugte Weiterbildungen der Erfindung sind Gegenstand der Unteransprüche. Weitere vorteilhafte Merkmale ergeben sich aus der Beschreibung der Ausführungsbeispiele.

Die erfindungsgemäße Nabe ist insbesondere für den Einsatz an Fahrrädern vorgesehen und besonders bevorzugt dient die erfindungsgemäße Nabe als Vorderradnabe. Die Nabe umfasst ein Nabengehäuse und wenigstens zwei darin an Lagersitzen aufgenommene Lager, um das Nabengehäuse drehbar gegenüber einer Steckachse zu lagern. Dabei sind die beiden Lager durch eine Hülse axial beabstandet voneinander gehalten. Wenigstens eine radiale Abstandshalteeinrichtung ist vorgesehen, um das radiale Spiel der Hülse in dem Nabengehäuse zu verringern und das Einführen der Steckachse zu erleichtern.

Die erfindungsgemäße Nabe hat viele Vorteile. Ein erheblicher Vorteil der erfindungsgemäßen Nabe ist, dass durch den Einsatz einer Steckachse eine hohe Steifigkeit der Nabe gewährleistet wird, während andererseits durch die wenigstens eine radiale Abstandshalteeinrichtung eine einfache Montage erlaubt wird. Die radiale Abstandshalteeinrichtung verringert das radiale Spiel der Hülse relativ zu dem Nabengehäuse erheblich, sodass im unmontierten Zustand die Steckachse mit geringem Aufwand durch ein Lager durchführbar und in die Hülse einführbar ist.

Gleichzeitig wird das im Bereich von Fahrradnaben wichtige Gesamtgewicht der Nabe praktisch nicht erhöht, da die radiale Abstandshalteeinrichtung sehr leicht bauend angefertigt sein kann. Die radiale Abstandshalteeinrichtung dient dazu, das Einführen der Steckachse durch die Hülse zu erleichtern. Sie dient nicht zur Übertragung radialer oder axialer Kräfte, so dass leichte Materialien, dünne Wandstärken und somit geringe Gewichte für die Abstandshalteeinrichtung möglich sind.

In vorteilhafter Weise ist die Abstandshalteeinrichtung derart angeordnet, dass eine berührungslose Drehung des Nabengehäuses um die Hülse im Betrieb möglich ist. Da die Hülse dazu dient, die Lagerinnenringe axial voneinander beabstandet zu halten, steht die Hülse im laufenden Betrieb genauso wie die Steckachse fest, während sich das Nabengehäuse um die feststehende Steckachse und die Hülse dreht. Ein schleifender Kontakt würde hier auf Dauer zu Abrieb führen und die Funktion der Nabe beinträchtigen.

Durch die radiale Abstandshaltereinrichtung werden definierte Bedingungen eingestellt, welche das Einführen der Steckachse erheblich erleichtern.

Das radiale Spiel zwischen der Hülse und dem Nabengehäuse wird durch eine, zwei oder mehrere radiale Abstandseinrichtungen derart reduziert, dass ein einfaches Einführen der Steckachse möglich ist.

In einer bevorzugten Weiterbildung ist die Hülse als im Wesentlichen rohrförmiger Hohlkörper ausgebildet. Die Hülse ist insbesondere dünnwandig ausgebildet, um das Gesamtgewicht der Nabe nicht unnötig zu erhöhen.

In einer bevorzugten Weiterbildung ist wenigstens eine Abstandshalteeinrichtung an der Hülse angeordnet. Vorzugsweise wird wenigstens eine radiale Abstandshalteeinrichtung an der radialen Außenseite der Hülse angeordnet. Die Abstandhalteeinrichtung kann beispielsweise als ein separates Teil ausgeführt sein, welches z. B. bei der Montage auf die Außenseite der Hülse aufgebracht wird.

Möglich ist es aber auch, die Abstandshalteeinrichtung einstückig mit der Hülse auszubilden, sodass die Abstandshalteeinrichtung als Teil der Hülse an einer definierten oder an mehreren definierten Stellen radial von dem Hülsenkörper absteht, um das radiale Spiel zu verringern.

Bevorzugt ist die Abstandshalteeinrichtung als ein separates Teil ausgeführt. Die Abstandshalteeinrichtung kann beispielsweise ring- oder scheibenförmig ausgeführt sein und wird in axialer Richtung auf die Hülse aufgeschoben, um als Abstandshalter zu dienen und im unmontierten Zustand der Nabe an einer Gabel das Einführen der Steckachse bei der Montage zu erleichtern.

Vorzugsweise umfasst die Abstandshalteeinrichtung wenigstens einen ringförmigen Körper, der insbesondere aus einem flexiblen Material bestehen kann. Besonders bevorzugt besteht der ringförmige Körper aus einem leichten Material, Gummi, einem Kunststoff, Filz oder dergleichen. Ringförmige Körper aus solchen Materialien weisen ein geringes Gewicht auf und erfüllen die gewünschte Funktion. Möglich ist es aber auch, dass ein Ring aus einem Leichtmetall oder dergleichen auf der Hülse vorgesehen ist.

Um eine dauerhafte Funktion auch bei mehrmaliger Montage und Demontage zu gewährleisten, kann der ringförmige Körper in einer Nut auf der Außenseite der Hülse oder der Innenseite des Nabengehäuses geführt sein, sodass ein axiales Verschieben des ringförmigen Körpers zuverlässig verhindert wird.

Die Anordnung der Abstandshalteeinrichtung als separates Teil an der Hülse bietet Vorteile gegenüber einer einstückigen Fertigung, da die Bearbeitung wesentlich einfacher ist. Die Hülse muss nicht dahingehend bearbeitet werden, dass eine radiale Abstandshalteeinrichtung stehen bleibt, sondern es kann eine separate Abstandshalteeinrichtung auf die Hülse aufgeführt oder in das Nabengehäuse eingeführt werden. Die Anfertigung einer Nut oder zweier Nuten auf der Hülse ist erheblich einfacher als die Bearbeitung der Hülse derart, dass eine radiale Abstandshalteeinrichtung stehen bleibt.

In allen Ausgestaltungen ist es möglich, dass die Abstandshalteeinrichtung oder das wenigstens eine Abstandshalteeinrichtung an dem Nabengehäuse angeordnet und/oder befestigt ist. Beispielsweise kann eine Abstandshalteeinrichtung auch auf der radialen Innenumfangsfläche des Nabengehäuses angeordnet werden und als Scheibe mit einem entsprechenden Durchgangsloch oder als Ring ausgeführt sein.

In allen Ausgestaltungen ist es bevorzugt, dass wenigstens eine Abstandshalteeinrichtung als O-Ring ausgeführt ist, der insbesondere in eine Außennut auf der Hülse eingelegt wird, oder der in eine Innennut des Nabengehäuses eingeführt wird.

Besonders bevorzugt wird die Abstandshalteeinrichtung auf der Hülse vorgesehen, da bei einer solchen Ausgestaltung auch eine einfache Nachrüstung bestehender Naben möglich ist. Durch den einfachen Austausch einer axialen Abstandshülse durch die mit einem radialen Abstandshalter ausgerüstete Hülse kann auch die Montage bestehender Naben erheblich erleichtert werden.

Vorteilhafterweise umfasst die Nabe eine Steckachse, die mitgeliefert wird und die insbesondere an einem Einsteckende eine Anfasung zum Erleichtern des Einsteckens aufweist. Insbesondere sind eine radiale Ausdehnung der Abstandshalteeinrichtung, ein Außendurchmesser der Anfasung und ein Innendurchmesser der Hülse derart aufeinander abgestimmt, dass das Einsteckende in die im Nabengehäuse liegende Hülse einschiebbar ist.

Eine radiale Ausdehnung der Abstandshalteeinrichtung ist vorzugsweise derart bemessen, dass in die im Nabengehäuse liegende Hülse die Anfasung des Einsteckendes einschiebbar ist.

Vorzugsweise ist an wenigstens einer axialen Seite des Nabengehäuses ein Adapterring vorgesehen. Besonders bevorzugt ist an beiden axialen Endseiten des Nabengehäuses jeweils ein Adapterring vorgesehen, der jeweils mit einem Abschnitt in das Nabengehäuse eingeführt ist und dort an dem Lagerinnenring anliegt und den Lagerinnenring in axialer Richtung abstützt.

Die Adapterringe sind insbesondere axial in das Nabengehäuse eingesteckt, sodass eine besonders einfache Demontage möglich ist.

Es hat sich herausgestellt, dass bei der Demontage eines Laufrades die axialen Adapterringe aus dem Nabengehäuse herausfallen können, wenn die Steckachse entfernt wird. Das wird insbesondere auch dadurch begünstigt, dass der Adapterring zum Nabengehäuse ein gewisses radiales Spiel aufweisen muss, um einen reibenden Kontakt des feststehenden Adapterrings an dem sich drehenden Nabengehäuse zu verhindern.

In bevorzugten Weiterbildungen ist jedem Adapterring vorzugsweise wenigstens eine Halteeinrichtung zugeordnet, um den Adapterring an dem Nabengehäuse auch nach der Entfernung der Steckachse zu halten.

Vorzugsweise bestehen die Halteeinrichtungen aus einem Leichtmetall oder aus Kunststoff und sind insbesondere ringförmig gestaltet. Besonders bevorzugt ist wenigstens eine Halteeinrichtung an einem axialen Ende des Nabengehäuses in das Ende eingepresst oder eingeschraubt. Eine solche Halteeinrichtung verringert den freien Durchmesser am Ende des Nabengehäuses, sodass der Adapterring nicht mehr durch die verbleibende Öffnung nach außen gezogen werden kann. Dadurch wird der Adapterring an dem Nabengehäuse gesichert. Gleichzeitig sind die Abmessungen der Halteeinrichtung und des Adapterrings so gewählt, dass ein berührungsloser Betrieb möglich ist.

Weitere vorteilhafte Anwendungen und Merkmale der vorliegenden Erfindung ergeben sich aus den Ausführungsbeispielen, die im Folgenden mit Bezug auf die Figuren erläutert werden.

### In den Figuren zeigen:

- Fig. 1: eine perspektivische Explosionsansicht einer Vorderradnabe an einer Fahrradgabel;
- Fig. 2: eine geschnittene Ansicht der Vorderradnabe nach Fig. 1;
- Fig. 3: eine geschnittene Ansicht einer weiteren erfindungsgemäßen Nabe; und
- Fig. 4: eine schematische Darstellung des Einführvorgangs einer Steckachse in eine erfindungsgemäße Nabe.

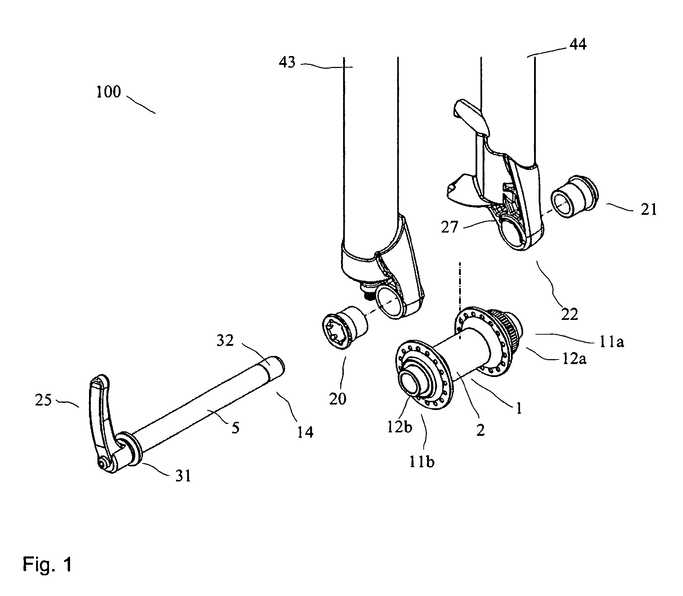

Mit Bezug auf die Figuren 1 bis 4 werden im Folgenden zwei Ausführungsbeispiele der vorliegenden Erfindung beschrieben.

Die erfindungsgemäße Nabe 1 ist insbesondere als Vorderradnabe ausgeführt und kann beispielsweise an einer Federgabel 100 zum Einsatz kommen. Die in Figur 1 in einer Explosionsdarstellung nur teilweise und schematisch dargestellte Federgabel 100 weist Standrohre 43 und 44 mit unteren Ausfallenden 22 auf, an denen Buchsen 20 und 21 in die Standrohre 43 und 44 eingesetzt sind.

Zur Montage der Nabe 1 an der Federgabel 100 wird ein hier nicht dargestelltes Laufrad mit der Nabe 1 zwischen die Buchsen 20 und 21 gehalten und die Steckachse 5 wird mit dem Einsteckende 14 durch die Buchse 20 in das Nabengehäuse 2 der Nabe 1 eingeführt und mit Hilfe des Schnellspannhebels 25 verschraubt, sodass sich ein fester Sitz der Nabe 1 bzw. des Laufrades an der Vorderradgabel 100 ergibt. Die Rändelscheibe 31 trägt zur Sicherung der Verbindung bei.

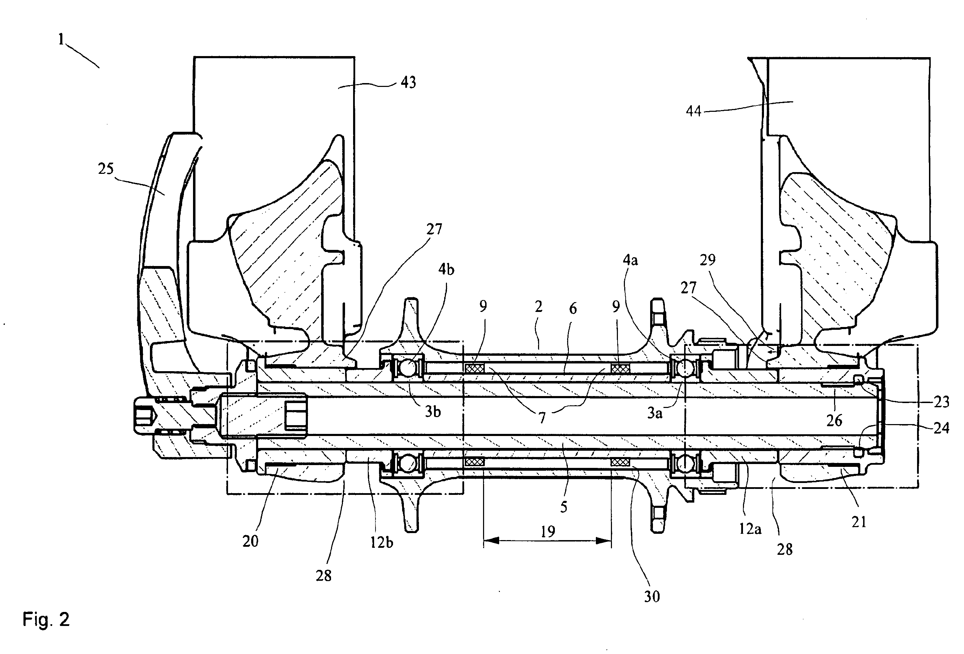

Die Nabe 1 aus Figur 1 ist in der Figur 2 in einem Schnitt dargestellt. Wie bei solchen für Steckachsen 5 vorgesehenen Naben 1 üblich, weist die Nabe 1 eine innere Hülse 6 auf, die als axialer Abstandshalter der beiden Lager 4a und 4b dient. Ohne einen solchen axialen Abstandshalter in Form einer Hülse 6 würden die Lagerinnenringe der Lager 4a und 4b axial nach innen aufgrund der seitlichen Kräfte verschoben werden.

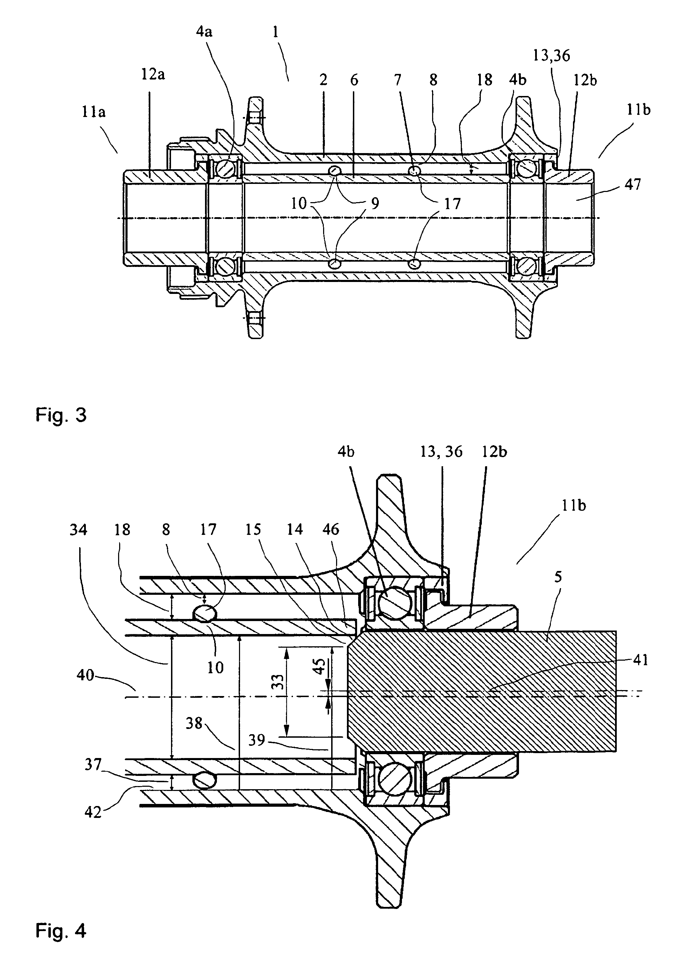

Da die Steckachse 5 direkt radial innerhalb der Lagerinnensitze 3a und 3b der Lager 4a und 4b angeordnet wird, liegt die als separates Teil ausgebildete Hülse 6 im ummontierten Zustand auf der jeweils unteren Innenwandung 42 (vgl. Fig. 4) des Nabengehäuses 2 auf.

Bei einer konventionellen Nabe führt das dazu, dass die Hülsenwandung 46 im oberen Bereich so tief innerhalb der Einführöffnung 47 liegt, dass die Hülse das Einführen der Steckachse von der Seite 11b behindert.

Um dieses Problem zu lösen muss der Benutzer ein Werkzeug oder seinen Finger zu Hilfe nehmen und von der anderen Seite 11a aus in die Nabe hineingreifen und die Hülse 6 anheben und zentrieren, sodass das Einsteckende 14 der Steckachse 5 in das Innere der Hülse 6 eingeführt werden kann. Da der Benutzer oftmals gleichzeitig das Vorderrad insgesamt so positionieren muss, dass er die Steckachse 5 in die Adapterringe 12a bzw. 12b einführen kann, wird so insgesamt einiger Koordinierungsaufwand vom Benutzer verlangt. Dies ist zeitraubend und kann ärgerlich sein.

Hier bietet die Erfindung den Vorteil, dass durch die radialen Abstandshalter 7, die insbesondere als ringförmige Körper 9 ausgeführt sind, das radiale Spiel 8 der Hülse 6 von dem ursprünglichen radialen Abstand, der sich aus der Summe der Abstände 18 und 37 ergibt, erheblich auf das radiale Spiel 8 verringert wird. Die anteilige Reduktion des Spiels kann 30, 50, 75 oder noch mehr Prozent betragen und hängt vom jeweiligen Anwendungsfall ab.

Die Hülse 6 wird durch die im Ausführungsbeispiel nach Fig. 1 als O-Ring 17 ausgeführten radialen Abstandshalter 7 um die radiale Ausdehnung 37 der Abstandshalteeinrichtung 7 angehoben, sodass das Einsteckende 14 mit der Anfasung 15 in den Innendurchmesser 34 der Hülse 6 ohne weiteres Werkzeug eingeschoben werden kann.

Wichtig ist, dass durch die in unmontierten Zustand auf der unteren radialen Innenseite 42 des Nabengehäuses 2 mittels der Abstandshalter 7 aufliegende Hülse 6 derart zentrisch positioniert ist, dass ein problemloses Einschieben der Steckachse 5 ermöglicht wird.

Dazu muss die Hülse 6 derart angeordnet sein und solche freie Abmessungen aufweisen, dass ein Einschieben der Anfasung 15 des Einsteckendes 14 der Steckachse 5 möglich ist. Dies ist in Figur 4 schematisch dargestellt. Praktisch erfüllt ist das z.B. in dem einfachen Fall, wenn die mit dem Durchmesser 33 versehene Anfasung 15, der freie Innendurchmesser 34 der Hülse 6 und die radiale Ausdehnung 37 der Abstandshalteeinrichtung 7 entsprechend aufeinander abgestimmt sind.

Die Höhe 38 von der unteren Innenumfangsfläche 42 des Nabengehäuses 2 bis zu der oberen Hülsenwandung 46 der Hülse 6 muss größer sein als die Höhe 39 von der Innenumfangsfläche 42 des Nabengehäuses 2 bis zur Oberkante der Anfasung 15. Wenn das radiale Spiel 8 auf ein solches Maß verringert ist, ist ein einfaches Einschieben der Steckachse 5 in die Nabe und in die Hülse 6 gewährleistet. Im montierten Zustand entspricht der Betriebsabstand 30 dem halben radialen Spiel 8.

Anders gesagt muss der Abstand 45 der Mittelachse 40 der Hülse 6 von der Mittelachse 41 der Lager 4a, 4b bzw. der einzuführenden Steckachse 5 kleiner als die radiale Erstreckung der Anfasung 15 sein, sodass das Einsteckende 14 mit der Anfasung 15 in den Innendurchmesser 34 der Hülse 6 einführbar ist.

In allen Ausgestaltungen werde insbesondere zwei radiale Abstandshalteeinrichtungen 7 eingesetzt, die axial um einen Abstand 19 voneinander beabstandet sind. Je weiter die radialen Abstandshalteeinrichtungen 7 voneinander entfernt sind, desto kleiner ist eine mögliche Verkippung der Hülse. Vorzugsweise sind die radialen Abstandshalteeinrichtungen 7 axial möglichst weit außen vorgesehen, um definierte Bedingungen zur Verfügung zu stellen.

Die radialen Abstandshalteeinrichtungen 7 können wie in Fig. 3 und 4 dargestellt als O-Ringe 17 ausgeführt sein und in Nuten 10 auf der Außenseite der Hülse 6 axial fixiert werden. Möglich ist es aber auch, dass die radialen Abstandshalteeinrichtungen 7 sich als ringförmiges Band oder dergleichen um die Hülse 6 herum erstrecken. Das ringförmige Band kann auf die Hülse aufgeklebt sein oder sonst wie daran befestigt werden.

Als weitere Einführhilfe ist im Ausführungsbeispiel an der Federgabel ein Überstand 27 vorgesehen, der im normalen Betriebszustand oberhalb der Adapterringe 12a bzw. 12b mit einem leichten Abstand vorgesehen ist. Um die Steckachse 5 in die Nabe 1 einzuführen, kann die Federgabel 100 mit den Überständen 27 auf die Adapterringe 12a und 12b aufgesetzt werden. In dieser Position wird durch die Anfasung 15 an deren Einsteckende 14 eine einfache Einfädelung der Steckachse 5 in die Adapterringe 12a bzw. 12b gewährleistet. Insgesamt ergibt sich so eine einfache Montierbarkeit eines Laufrades und der Nabe 1 an einer Gabel oder auch Federgabel 100.

Zum Befestigen der Steckachse 5 an der Federgabel 100 wird ein Gewinde 33 an der Steckachse 5 mit einem entsprechenden Gewinde 26 an der Hülse 21 in dem Ausfallende 22 der Federgabel 100 verschraubt. Ein O-Ring 24 in einer Nut 23 sorgt für eine Dichtung, sodass das Gewinde 26 vor Staub und Wasser geschützt ist.

Oberhalb der Steckachse5 sind axiale Fortsätze bzw. Überstände 27 an den beiden Standrohren 43, 44 vorgesehen, die axial nach innen eine Länge bzw. Breite 29 überstehen und Auflager bilden, auf die ein Laufrad bzw. eine Nabe 1 aufgelegt werden kann, wenn das Fahrrad beispielsweise auf dem Kopf steht.

Das erleichtert das Einführen und das Einfädeln der Steckachse 5 in die Öffnung in den Buchsen 20 und 21, da die Nabe grundsätzlich schon an der richtigen Stelle gehalten wird. Es kann ein kleiner radialer Abstand vorliegen, der hier beispielsweise 0,5 oder 1 mm betragen kann, um eine Berührung der Außenseite der Nabe und des Standrohrs 43 bzw. 44 zu vermeiden. Dennoch befindet sich die Nabe 1 in dieser Position schon etwa an der richtigen Stelle, sodass das Einfädeln erheblich erleichtert wird.

Genauso gut wird das Einfädeln auch erleichtert, wenn die Gabel auf das auf dem Boden stehende Rad aufgesetzt wird, da die Überstände 27 ebenfalls dafür sorgen, dass die Federgabel 100 relativ zur Nabe 1 gut vorpositioniert wird.

Im unmontierten Zustand werden die Adapterringe 12a und 12b vor einem unbeabsichtigten Herausfallen durch die als Verschlusskappen 36 ausgeführten Halteeinrichtungen 13 gesichert. Jeweils eine Verschlusskappe 36 wird in das jeweilige Ende 11a bzw. 11b eingepresst.

Die Verschlusskappen 36 weisen jeweils eine Durchgangsöffnung auf, durch die das axiale Ende des jeweiligen Adapterrings 12a bzw. 12b nach außen hindurchragt. Um den Adapterring aus dem Nabengehäuse 2 zu entfernen, muss aber die entsprechende Verschlusskappe 36 abgezogen werden. Die Verschlusskappen 36 können aus einem Leichtmetall oder auch aus einem Kunststoff oder dergleichen bestehen. Im montierten Zustand liegt ein bestimmter freier Abstand der Verschlusskappen 36 zum Adapterring vor, der auch gering sein kann. Die Berührungsfreiheit ist wichtig, da die Verschlusskappen 36 mit dem Nabengehäuse mitdrehen, während die Adapterringe 12a, 12b im montierten Zustand feststehend angeordnet sind.

Während auf der Oberseite der Ausfallenden 22 die axial nach innen ragenden Vorsprünge bzw. Überstände 27 vorgesehen sind, können an der unteren Seite axiale Rücksprünge 28 an den Ausfallenden 22 vorgesehen sein, sodass am untersten Ende der Standrohre 43 und 44 der axiale Abstand zwischen den Standrohren größer ist, als im Bereich der Überstände 27. Das erleichtert die Montage und auch die Demontage. Ein Vorteil ist, dass beim Einführen einer Nabe 1 oder eines Laufrades von unten die Ausfallenden 22 besser vor Kontakt mit der Nabe 1 geschützt sind, da die zur Verfügung stehende Breite erheblich größer ist als erforderlich. Dadurch wird ein Verschleiß und eine Beschädigung an den unteren Enden der Standrohre 43 und 4 beim Ein- und Ausbauen der Laufräder weitgehend vermieden, sodass die Lebensdauer steigt.

### Bezugszeichenliste:

- 1: Nabe
- 2: Nabengehäuse
- 3a, 3b: Lagersitz
- 4a, 4b: Lager
- 5: Steckachse
- 6: Hülse
- 7: Abstandshalteeinrichtung
- 8: radiales Spiel
- 9: ringförmiger Körper
- 10: Nut
- 11a, 11b: Endseite
- 12a, 12b: Adapterring
- 13: Halteeinrichtung
- 14: Einsteckende
- 15: Anfasung
- 16: Außendurchmesser
- 17: O-Ring
- 18: radialer Abstand
- 19: axialer Abstand
- 20: Buchse
- 21: Buchse
- 22: Ausfallende
- 23: Nut
- 24: O-Ring
- 25: Schnellspannhebel
- 26: Gewinde
- 27: Überstand
- 28: Rücksprung
- 29: Länge
- 30: Betriebsabstand
- 31: Rändelscheibe
- 32: Gewinde
- 33: Durchmesser der Anfasung
- 34: Innendurchmesser der Hülse
- 36: Verschlusskappe
- 37: radiale Ausdehnung der Abstandshalteeinrichtung
- 38: Höhe
- 39: Höhe
- 40: Mittelachse
- 41: Mittelachse
- 42: untere Innenwandung
- 43: Standrohr
- 44: Standrohr
- 45: Abstand
- 46: Hülsenwandung
- 47: Einführöffnung
- 100: Federgabel

## Patentansprüche

1. Nabe (1), insbesondere für Fahrräder,
mit einem Nabengehäuse (2) und wenigstens zwei darin an Lagersitzen (3) aufgenommenen Lagern (4) zur drehbaren Lagerung gegenüber einer Steckachse (5), wobei die beiden Lager (4) durch eine Hülse (6) axial beabstandet voneinander gehalten werden,
**dadurch gekennzeichnet,**
**dass** wenigstens eine radiale Abstandshalteeinrichtung (7) vorgesehen ist, um das radiale Spiel (8) der Hülse (6) in dem Nabengehäuse (2) zu verringern und das Einführen der Steckachse (5) zu erleichtern.

2. Nabe nach Anspruch 1, wobei die Hülse (6) als im Wesentlichen rohrförmiger Hohlkörper ausgebildet ist.

3. Nabe nach Anspruch 1 oder 2, wobei wenigstens eine Abstandshalteeinrichtung (7) an der Hülse (6) angeordnet ist.

4. Nabe (1) nach einem der vorhergehenden Ansprüche, wobei die Abstandshalteeinrichtung (7) einstückig mit der Hülse (6) gebildet ist.

5. Nabe (1) nach einem der vorhergehenden Ansprüche, wobei wenigstens eine Abstandshalteeinrichtung (7) an dem Nabengehäuse (2) angeordnet ist.

6. Nabe (1) nach einem der vorhergehenden Ansprüche, wobei die Abstandshalteeinrichtung (7) wenigstens einen ringförmigen Körper (9) umfasst.

7. Nabe (1) nach einem der vorhergehenden Ansprüche, wobei der ringförmige Körper (9) in einer Nut (10) geführt wird.

8. Nabe (1) nach einem der vorhergehenden Ansprüche, wobei der ringförmige Körper (9) aus einem flexiblen Material besteht.

9. Nabe (1) nach einem der vorhergehenden Ansprüche, wobei der ringförmige Körper (9) wenigstens teilweise aus Gummi, Kunststoff, Filz, Leichtmetall oder dergleichen besteht.

10. Nabe (1) nach einem der vorhergehenden Ansprüche, wobei die Steckachse (5) an einem Einsteckende (14) eine Anfasung (15) zum Erleichtern des Einsteckens aufweist.

11. Nabe (1) nach einem der vorhergehenden Ansprüche, wobei eine radiale Ausdehnung der Abstandshalteeinrichtung, ein Außendurchmesser der Anfasung (15) und ein Innendurchmesser der Hülse (5) derart aufeinander abgestimmt sind, dass das Einsteckende (14) in die im Nabengehäuse (2) liegende Hülse (5) einschiebbar ist.

12. Nabe (1) nach einem der vorhergehenden Ansprüche, wobei eine radiale Ausdehnung (37) der Abstandshalteeinrichtung derart bemessen ist, dass in die im Nabengehäuse (2) liegende Hülse (5) die Anfasung (15) des Einsteckendes (14) einschiebbar ist.

13. Nabe (1) nach einem der vorhergehenden Ansprüche, wobei an wenigstens einer axialen Endseite (11a, 11b) ein Adapterring (12a, 12b) vorgesehen ist.

14. Nabe (1) nach einem der vorhergehenden Ansprüche, wobei wenigstens ein Adapterring (12) durch eine an dem Nabengehäuse (2) befestigte Halteeinrichtung (13, 36) gehalten wird.

15. Nabe (1) nach einem der vorhergehenden Ansprüche, wobei die Halteeinrichtung (13, 36) wenigstens teilweise aus einem Leichtmetall oder Kunststoff besteht und/oder wobei die Halteeinrichtung (13, 36) in das Ende des Nabengehäuses (2) eingepresst oder eingeschraubt ist.

## Claims

1. A hub (1), in particular for bicycles,
having a hub shell (2) and at least two bearings (4) received therein on bearing seats (3) for rotatably supporting relative to a through axle (5), wherein the two bearings (4) are retained axially spaced apart from one another by means of a sleeve (6),
**characterized in**
**that** at least one radial spacer device (7) is provided to reduce the radial play (8) of the sleeve (6) in the hub shell (2) and to facilitate inserting the through axle (5).

2. The hub according to claim 1, wherein the sleeve (6) is configured as a substantially tubular, hollow body.

3. The hub according to claim 1 or 2, wherein at least one spacer device (7) is disposed on the sleeve (6).

4. The hub (1) according to any of the preceding claims
wherein the spacer device (7) is formed integrally with the sleeve (6).

5. The hub (1) according to any of the preceding claims
wherein at least one spacer device (7) is disposed on the hub shell (2).

6. The hub (1) according to any of the preceding claims
wherein the spacer device (7) comprises at least one annular body (9).

7. The hub (1) according to any of the preceding claims
wherein the annular body (9) is guided in a groove (10).

8. The hub (1) according to any of the preceding claims
wherein the annular body (9) consists of a flexible material.

9. The hub (1) according to any of the preceding claims
wherein the annular body (9) consists at least in part of rubber, plastic, felt, a light metal or the like.

10. The hub (1) according to any of the preceding claims
wherein the through axle (5) comprises a chamfered edge (15) at one insertion end (14) to facilitate inserting.

11. The hub (1) according to any of the preceding claims
wherein a radial extension of the spacer device, an inner diameter of the chamfered edge (15), and an internal diameter of the sleeve (5) are matched to one another such that the insertion end (14) can be inserted into the sleeve (5) lying inside the hub shell (2).

12. The hub (1) according to any of the preceding claims
wherein a radial extension (37) of the spacer device is dimensioned such that the chamfered edge (15) of the insertion end (14) can be inserted into the sleeve (5) lying inside the hub shell (2).

13. The hub (1) according to any of the preceding claims
wherein at least one axial end face (11a, 11b) is provided with an adapter ring (12a, 12b).

14. The hub (1) according to any of the preceding claims
wherein at least one adapter ring (12) is retained by a retaining device (13, 36) fastened to the hub shell (2).

15. The hub (1) according to any of the preceding claims
wherein the retaining device (13, 36) consists at least in part of a light metal or plastic and/or wherein the retaining device (13, 36) is pressed or screwed into the end face of the hub shell (2).

## Revendications

1. Moyeu (1), en particulier pour bicyclettes, comprenant un carter de moyeu (2) et au moins deux paliers (4) reçus à l'intérieur de celui-ci sur des logements de palier (3) et destinés au logement à rotation par rapport à un axe de roue (5), les deux paliers (4) étant maintenus à espacement axial l'un de l'autre par une douille (6), **caractérisé par le fait qu'**au moins un dispositif écarteur radial (7) est prévu afin de réduire le jeu radial (8) de ladite douille (6) à l'intérieur du carter de moyeu (2) et de faciliter l'introduction dudit axe de roue (5).

2. Moyeu selon la revendication 1, dans lequel ladite douille (6) est réalisée en tant que corps creux pour l'essentiel tubulaire.

3. Moyeu selon la revendication 1 ou 2, dans lequel au moins un dispositif écarteur (7) est disposé sur ladite douille (6).

4. Moyeu (1) selon l'une quelconque des revendications précédentes, dans lequel le dispositif écarteur (7) est réalisé d'un seul tenant avec ladite douille (6).

5. Moyeu (1) selon l'une quelconque des revendications précédentes, dans lequel au moins un dispositif écarteur (7) est disposé sur ledit carter de moyeu (2).

6. Moyeu (1) selon l'une quelconque des revendications précédentes, dans lequel ledit dispositif écarteur (7) comprend au moins un corps annulaire (9).

7. Moyeu (1) selon l'une quelconque des revendications précédentes, dans lequel ledit corps annulaire (9) est guidé dans une rainure (10).

8. Moyeu (1) selon l'une quelconque des revendications précédentes, dans lequel ledit corps annulaire (9) est réalisé dans une matière flexible.

9. Moyeu (1) selon l'une quelconque des revendications précédentes, dans lequel ledit corps annulaire (9) est réalisé au moins en partie en caoutchouc, matière plastique, feutre, métal léger ou similaire.

10. Moyeu (1) selon l'une quelconque des revendications précédentes, dans lequel ledit axe de roue (5) présente un chanfrein (15) à une extrémité d'introduction (14) pour faciliter l'introduction.

11. Moyeu (1) selon l'une quelconque des revendications précédentes, dans lequel une extension radiale du dispositif écarteur, un diamètre extérieur du chanfrein (15) et un diamètre intérieur de la douille (5) sont accordés les uns aux autres de manière à ce que ladite extrémité d'introduction (14) puisse être introduite dans la douille (5) située à l'intérieur du carter de moyeu (2).

12. Moyeu (1) selon l'une quelconque des revendications précédentes, dans lequel une extension radiale (37) du dispositif écarteur est dimensionnée de manière à ce que le chanfrein (15) de ladite extrémité d'introduction (14) puisse être introduit dans la douille (5) située à l'intérieur du carter de moyeu (2).

13. Moyeu (1) selon l'une quelconque des revendications précédentes, dans lequel un anneau adaptateur (12a, 12b) est prévu sur au moins un côté terminal axial (11a, 11 b).

14. Moyeu (1) selon l'une quelconque des revendications précédentes, dans lequel au moins un anneau adaptateur (12) est maintenu par un dispositif de maintien (13, 36) fixé sur le carter de moyeu (2).

15. Moyeu (1) selon l'une quelconque des revendications précédentes, dans lequel ledit dispositif de maintien (13, 36) est réalisé au moins en partie dans un métal léger ou une matière plastique et/ou dans lequel ledit dispositif de maintien (13, 36) est pressé ou vissé dans l'extrémité du carter de moyeu (2).
